# EUROPEAN PATENT APPLICATION

(11) **EP 1 772 491 A1**
(43) Date of publication of application: **11.04.2007**
(21) Application number: 05077284.7
(22) Date of filing: 07.10.2005
(51) Int. Cl.: C08L 61/24, C08L 61/28, C08L 61/34, C09D 161/24, C09D 161/28, C09D 161/34, C09J 161/34, C09J 161/24, C09J 161/28, C08L 35/06

(54) **Dispersion of melamine or aminoplast resin**

(71) Applicant: DSM IP Assets B.V., 6411 TE Heerlen (NL)
(72) Inventor: Keijzer de, Augustinus Eugene Henk, 6133 VK Sittard (NL)
(74) Representative: Koster, Nico

(57) **Abstract**

The invention relates to a dispersion of melamine in a liquid or an aminoplast resin in a liquid, whereby the dispersion contains a dispersant, said dispersant comprising a styrene-maleic anhydride copolymer. The invention further relates to a method for preparing the said dispersant, and to its use in adhesive compositions, coatings or laminates.

## Description

The invention relates to a dispersion, in particular a dispersion of melamine in a liquid or a dispersion of an aminoplast resin in a liquid.

In EP 1 099 762 A2 aqueous melamine resin dispersions are disclosed, comprising as discontinuous phase a melamine resin stabilized by a combination of a cationic and an anionic protective colloid. In EP 1 099 762 A2 the cationic protective colloid preferably comprises cationic starch; the anionic protective colloid preferably comprises a copolymer of acrylic acid, methyl acrylate and 2-acrylamido-2-methylpropanesulfonic acid.

A disadvantage of the known dispersion is that the protective colloid system is rather complicated, thus requiring much effort to create it; it is consequently also an expensive system.

It is the objective of the present invention to reduce the said disadvantage.

The said objective is achieved by a dispersion of melamine or an aminoplast resin in a liquid, whereby the dispersion contains a dispersant, said dispersant comprising a styrene-maleic anhydride copolymer.

Within the framework of the present invention, the term dispersion means a system comprising two phases whereby one phase is continuous and the other phase discontinuous, said discontinuous phase being distributed over the continuous phase. The term dispersion is thereby more generic than - and encompasses - gas-in-liquid systems (foams), liquid-in-liquid systems (emulsions) and solid-in-liquid systems (sols). The discontinuous phase in the dispersion according to the invention is present in the form of particles. As meant herein, the term particles encompasses solid entities but also liquid entities. Although the size of the dispersed particles may vary within wide limits, it is preferred that the weight-averaged size lies between 0.1 µm and 100 µm, more preferably between 0.5 and 75 µm, between 1 and 50 µm, between 1.5 and 25 µm, or even between 1.75 µm and 15 µm or between 2 µm and 10 or 5 µm.

As is known, dispersions often contain a compound or mixture of compounds that specifically serves to help create or to stabilize a dispersion and/or influence particle size. Such a compound is within the context of the present invention referred to as a dispersant. The term dispersant as used herein is thereby more generic than - and encompasses - protective colloids or surfactants. The use and presence of a dispersant helps to create a stable dispersion. Within the context of the present invention, the term 'stable' can - in relation to a dispersion - have two meanings: either that the dispersed particles do not separate out, coagulate or settle for at least 30 minutes (or even at least 1 hour or preferably at least 24 hours) after dispersion preparation; or that the dispersed particles can be easily re-dispersed through agitation in case they have separated out, coagulated or settled.

The dispersion according to the invention may be a dispersion of melamine in a liquid. In this embodiment of the invention, melamine is present in essentially unreacted form, and constitutes then a part of (e.g, 10 wt.% or 25 wt.%), the majority of (e.g., 55 wt.% or 75 wt.%), or essentially all of the discontinuous phase, either in solid or in liquid form. This does not exclude that melamine is also encompassed in the liquid that is the continuous phase; this will be the case when melamine has a certain solubility in the liquid phase. As is known, melamine is somewhat soluble in certain liquids such as water or ammonia.

In a preferred embodiment of the invention, the discontinuous phase of the dispersion according to the invention contains an aminoplast resin. As is known, the term aminoplast resin refers to the reaction product of an amino compound with an aldehyde. Examples of amino compounds are urea and melamine; examples of aldehydes are formaldehyde and alkanol hemiacetals such as the compounds according to formula (II) as disclosed in WO 03/101973 from page 2 line 21 to page 3 line 15. As used herein, the term aminoplast resin may refer to the resin in uncured, partially cured or fully cured state. The aminoplast resin may be present in the dispersion in the form of liquid droplets or in the form of solid particles.

The preparation of aminoplast resins such as melamine-formaldehyde resins, urea-formaldehyde resins or melamine-urea-formaldehyde resins is as such known. Reference can for example be made to "Kunststoff Handbuch, 10-Duroplaste" by W. Becker, D. Braun, 1988 Carl Hanser Verlag; more specifically to the chapter "Melaminharze", page 41 and further. As is known, a dispersion of an aminoplast resin may already be achieved by simply letting the resin-forming condensation reactions continue until the resin as formed is no longer soluble in the liquid phase wherein it is formed. As a general recommendation, however, it is noted that it is preferably avoided to have a degree of condensation of the aminoplast resin in the dispersed particles that is so high that it becomes impossible to let these particles undergo a curing in such a fashion that the particles fuse with other particles. Similarly, it is noted that it is preferably avoided to have a degree of curing in the dispersed particles that is so high that it becomes impossible to let these particles undergo a further curing in such a fashion that the particles fuse with other particles.

The dispersion according to the invention comprises a liquid as continuous phase. It may be necessary to establish conditions of temperature and pressure that differ from room temperature and atmospheric pressure in order to ensure that the compound that is to be the liquid phase is indeed in liquid form; this is the case with for example ammonia. Examples of liquids that may serve as the continuous phase in the dispersion according to the invention are: water; ammonia; alcohols such as methanol, ethanol, propanol and butanol; aprotic polaric solvents such as dimethylsulfoxide (DMSO) and dimethylformamide (DMF). Aqueous systems are preferred. In one particularly preferred embodiment of the invention, the liquid is an aqueous system comprising an aminoplast; one fashion of achieving this is by ensuring that the aminoplast resin that is comprised in the continuous phase has not reacted so far as to reach the point that it is no longer soluble, while by contrast the aminoplast resin that is comprised in the discontinuous phase has reacted so far that it is no longer soluble and/or has been partially cured.

The dispersion according to the invention contains a dispersant, said dispersant comprising a styrene-maleic anhydride copolymer. Styrene-maleic andydride copolymers as such are known. As is also known, the copolymer can be treated, e.g. with a base such as NaOH, so as to create ionic groups in the copolymer. This has the benefit that the copolymer becomes soluble or more soluble in various liquids such as for example aqueous systems. Within the context of the present invention, the term styrene maleic anhydride copolymer refers to the copolymer as such and/or to the copolymer after it has been treated so as to create ionic groups.

It is preferred that the weight-averaged molecular weight (Mw) of the styrene maleic anhydride copolymers is higher than 1,500, 3000, 10,000, 50,000 or even 100,000. It was found that the dispersing capability of the styrene maleic anhydride copolymers in the dispersion according to the invention and also the stability of the dispersion as formed increases with increasing Mw of the styrene maleic anhydride copolymer. Preferably, the said molecular weight Mw is at most 3,000,000 or 2,000,000, more preferably at most 1,000,000.

The molar ratio of styrene to maleic anhydride in the copolymer may according to the invention vary between wide limits, preferably between 1:0.1 and 1:1, more preferably between 1:0.5 and 1:1.

As is known, the monomeric styrene and maleic anhydride units may in a copolymer be present in essentially random fashion, or in block-copolymer fashion, or in alternation, or in any combination of the above. According to the invention any of these possibilities is suitable, although there is a preference for alternating copolymers in case the molar ratio of styrene to maleic anhydride is essentially 1:1, and for random- and partially alternating copolymers in case the molar ratio of styrene to maleic anhydride is below 1:1, e.g. 1:0.5.

As is known, aqueous solutions of styrene maleic anhydride copolymers may be prepared by a treatment of the copolymer in water with a base at an elevated temperature. An example of a suitable styrene maleic anhydride copolymer is Scripset^{®} 520 (supplier: Hercules; molecular weight about 350,000, molar styrene to maleic anhydride ratio 1:1).

The dispersant as comprised in the dispersion according to the invention comprises a styrene maleic anhydride copolymer. It is possible that the dispersant comprises other compounds, such as other types of dispersants; it is preferred, however, that the dispersant in the dispersion according to the invention consists for at least 50 wt.%, 60 wt.% or even at least 75 wt.% or 80 wt.% of a styrene maleic anhydride copolymer; more preferably, the dispersant consists essentially of a styrene maleic anhydride copolymer.

If the dispersion is to contain an aminoplast resin, the dispersant may be added to the resin-preparing system prior to, during or subsequent to the aminoplast resin-forming reactions. It is an advantage of the dispersion according to the invention that the dispersant may be added prior to or during the forming of the aminoplast resin.

The amount of dispersant to be added may vary within wide limits, depending a.o. on the precise nature of the dispersant, the liquid that constitutes the continuous phase, and also depending on the desired particle size to be achieved. Preferably, the dispersion according to the invention contains between 0.01 wt.% and 10 wt.% dispersant, more preferably between 0.05 wt.% and 7.5 wt.%, between 0.2 wt.% and 5 wt.% or between 1 wt.% and 3 wt.%.

The pH of the dispersion according to the invention can vary within wide limits, preferably between 3 and 11 or between 4 and 10, while still remaining stable. If melamine or a melamine-containing aminoplast resin is present, then this typically has a buffering character and will tend to influence the pH of the dispersion, often to within a range of 5 to 8 or 9.

A further advantage of using the dispersant according to the invention is that the dispersion can have a high solids content. The solids content of a dispersion is defined herein as the weight percentage of the sum all compounds that are not the liquid that is the continuous phase in the dispersion and - in case the particles comprise an aminoplast resin - not the liquid that was the continuous phase in the preparation of the aminoplast resin. The said two liquids may be identical, e.g. in case the final form of the dispersion is created during resin preparation; the said two liquids may be the same or different, e.g. in case the dispersion is created by adding a prepared aminoplast resin or dispersion to the liquid phase that is the continuous phase of the dispersion. The solids content of the dispersion according to the invention may vary between wide limits, depending a.o. on the further use of the dispersion. Preferably, the solids content is at least 5%, 10%, 15%, 20% or even 25% or 30%. Preferably, the solids content is at most 70%, 65%, 60%, 55%, 50% or even 45%.

The invention also relates to a method for preparing a dispersion according to the invention, comprising the step of bringing two phases together, whereby a dispersant comprising a styrene-maleic anhydride copolymer is added prior to, during or subsequent to the bringing of the two phases together.

The bringing together of two phases may be achieved by simply bringing them together. An example of this is the adding of melamine powder to water; another example is the adding of spray-dried melamine-formaldehyde resin particles to water.

Another fashion in which the two phases may be brought together is by creating them *in-situ.* An example of this is the continuation of an aminoplast resin-forming reaction in an aqueous system or an alcohol to such a degree that the resin is no longer soluble in the aqueous or alcohol system, leading to the resin separating out and thereby forming the second, discontinuous phase.

In the method according to the invention, the dispersant is added to the system; this may be done prior to, during or after the bringing of the two phases has been done. Preferably, the dispersant is added to the liquid that will be the continuous phase prior to the bringing together of the two phases. Surprisingly, in case resin-formation is taking place the styrene-maleic anhydride copolymer does not have a significant negative influence on the formation of the aminoplast resin or on its properties.

During preparation of the dispersion, the pH can vary within wide limits; the ranges as given above for the dispersion as obtained also apply to the preparation thereof.

The invention furthermore relates to the use of the dispersion according to the invention in the preparation of adhesive compositions, coatings or laminates. This may be done as such, or by combining the dispersion according to the invention with other components such as for example non-dispersant aminoplast resins. As is known to the skilled person, the uses as indicated typically comprise the eventual combining of the dispersion with a catalyst and possibly other additives.

The invention is further elucidated by means of the following example, without being limited thereto.

### Example 1

### Preparation of a melamine-formaldehyde resin dispersion

Preparation of a dispersant: an aqueous solution of a styrene maleic anhydride copolymer (Scripset^{®} 520, supplier: Hercules) was prepared. 61 gram of Scripset 520 was charged slowly to 455 grams of stirred water. After a reasonable lump-free slurry was achieved, 50 grams of 25 (wt.%) NaOH solution in water was added. An exothermal reaction to about 40°C occured. The batch was then heated to 82°C under stirring and held for 45 minutes. The pH was adjusted (upwards only) to 6.5.

Synthesis of a melamine-formaldehyde (MF) dispersion: the pH of 406 grams of a 38.5 wt.% aqueous solution of formaldehyde, to which 199 grams of water was added, was adjusted to 9.0 with 2 M NaOH. 394 grams of melamine were added; the mixture was then heated to reflux. After the melamine dissolved and a clear solution was obtained, the mixture was cooled down to 82°C. Then 145 grams of the dispersant solution as prepared above was added, and the pH of the mixture was adjusted to 7 with HNO₃, while at the same time the solution is vigorously stirred. After about 15 minutes a sharp turning point - i.e. a whitening - of the solution was seen. The solution turns from milky to a clear white turbid dispersion. The condensation reaction of the dispersion was continued for an additional 9 minutes after the turning point and then cooled down to 20°C. One minute after starting cooling down the pH of the dispersion was adjusted to a pH of 8.6 with 5M NaOH. About 8 grams was needed. While stirring the solution was cooled down to 20°C and stored in plastic bottle. The resulting dispersion had a solids content of 55% and a molar formaldehyde to melamine ratio of 1.65. The dispersion was stable for several days.

### Preparation of a coated substrate

The synthesized resin dispersion was applied to a beech veneer by means of a small doctor roll. After applying the wet dispersion the coating looked white. After drying at room temperature the coating turned into a white surface. This dried coated substrate was pressed at 150°C for 3 minutes at 30 bar in a press. After pressing a substrate having a clear transparent coating was obtained.

### Example 2

A dispersion was prepared by combining a clear, one-phase liquid melamine-formaldehyde resin having a molar formaldehyde to melamine ratio of 1.7 with the melamine-formaldehyde dispersion as prepared in Example 1. The solids content of the dispersion thus prepared was 58%, whereby 55% originated from the one-phase liquid melamine-formaldehyde resin and 3% originated from the melamine-formaldehyde dispersion as prepared in Example 1. Furthermore, 0.2 wt% of wetting agent Netzmittl PAT959/9 and 0.2 wt.% of a release agent PAT-2523 were added to the dispersion.

A 20 cm x 20 cm piece of a carrier in the form of a Munksjö Décor Paper (80 g/m²) was impregnated once with dispersion as prepared, then dried for 420 seconds at 100°C. The impregnated paper carrier was then laminated on an MDF board at 100 kN and 190°C for 50 seconds. As the skilled person knows, these conditions are typical conditions for preparing a so-called LPL, i.e. a 'low-pressure' laminate. Surprisingly, the gloss of the laminate as obtained as measured at 20° was 120, about the same as that of a HPL (high-pressure laminate). As the skilled person knows, known LPL's made with once-impregnated carriers have a lower gloss than a HPL, typically 95-100 when measured at 20°.

## Claims

1. Dispersion of melamine or an aminoplast resin in a liquid, whereby the dispersion contains a dispersant, said dispersant comprising a styrene-maleic anhydride copolymer.

2. Method for preparing a dispersion according to claim 1, comprising the step of bringing two phases together, whereby a dispersant comprising a styrene-maleic anhydride copolymer is added prior to, during or subsequent to the bringing of the two phases together.

3. Use of the dispersion according to claim 1 in adhesive compositions, coatings or laminates.
